**Europäisches Patentamt**

**European Patent Office**

**Office européen des brevets**

(11) Veröffentlichungsnummer: **0 421 158 A1**

# (12) EUROPÄISCHE PATENTANMELDUNG

(21) Anmeldenummer: **90117508.3**

(22) Anmeldetag: **11.09.90**

(51) Int. Cl.5: **G01N 27/16**

(30) Priorität: **02.10.89 DE 3932880**

(43) Veröffentlichungstag der Anmeldung:
**10.04.91 Patentblatt 91/15**

(84) Benannte Vertragsstaaten:
**DE FR GB IT**

(71) Anmelder: **FRAUNHOFER-GESELLSCHAFT ZUR FÖRDERUNG DER ANGEWANDTEN FORSCHUNG E.V.**
**Leonrodstrasse 54**
**W-8000 München 19(DE)**

(72) Erfinder: **Lang, Walter, Dr.**
**Schmied-Kochel-Strasse 22**
**W-8000 München 70(DE)**
Erfinder: **Kühl, Karl**
**Bronner Weg 4**
**W-8910 Landsberg(DE)**
Erfinder: **Drost, Stephan**
**Haidelweg 24**
**W-8000 München 60(DE)**
Erfinder: **Endres, Hanns-Erik**
**Stiftsbogen 148**
**W-8000 München 70(DE)**
Erfinder: **Richter, Axel**
**Haldenbergstrasse 28**
**W-8000 München 70(DE)**

(74) Vertreter: **Schoppe, Fritz, Dipl.-Ing. et al**
**Seitnerstrasse 42**
**W-8023 Pullach bei München(DE)**

(54) **Katalytischer Gassensor und Verfahren zum Herstellen desselben.**

(57) Ein katalytischer Gassensor (Pellistor) (1) hat einen aus einem ätzbaren Material bestehenden Trägerkörper (2), der eine Ausnehmung (3) aufweist, die eine Membran (4) festlegt, auf welcher ein Heizelement (5), eine Passivierungsschicht (6) und eine katalytisch aktive Oberflächenschicht (7) angeordnet sind.

Zur Reduktion der Leistungsaufnahme eines Gassensors (1) der obigen Art wird vorgeschlagen, daß die Membran (4) aus einem Isoliermaterial der Dünnschichttechnik, z.b. Siliziumoxid, Siliziumnitrid oder Aluminiumoxid besteht.

EP 0 421 158 A1

## KATALYTISCHER GASSENSOR UND VERFAHREN ZUM HERSTELLEN DESSELBEN

Die vorliegende Erfindung betrifft einen katalytischen Gassensor nach dem Oberbegriff des Patentanspruchs 1 und ein Verfahren zum Herstellen eines katalytischen Gassensors nach dem Oberbegriff des Patentanspruchs 5.

Katalytische Gassensoren, die auch Pellistoren genannt werden, erfassen das Vorliegen oder Nicht-Vorliegen von brennbaren Gasen durch Messung einer Temperaturerhöhung, die sich bei Vorliegen eines brennbaren Gases im Bereich des Gassensors durch die chemische Reaktion des brennbaren Gasgemisches auf der katalytisch aktiven Oberfläche des katalytischen Gassensors ergibt. Bekannte Gassensoren werden aus beschichtetem Sintermaterial gefertigt, in das ein Heizfaden eingearbeitet ist. Ein derartiger Gassensor hat einen vergleichsweise hohen Leistungsbedarf, um die für eine katalytische Reaktion an seiner katalytisch aktiven Oberflächenschicht erforderliche Temperatur zu erreichen. Ferner hat ein derartiger katalytischer Gassensor relativ lange Ansprechzeiten, also eine vergleichsweise lange Zeit, die bis zu einer entsprechenden Sensorsignaländerung vergeht, nachdem der Gassensor einem brennbaren Gas ausgesetzt wird. Daher erweist sich der bekannte katalytische Gassensor zu träge für die Gasdetektion in Warnsystemen für Explosionsgefahr und Feuergefahr.

Aus der Fachveröffentlichung F. Nuscheler: "An Investigation Of The Dynamic Behaviour Of A Silicon Microcalorimeter", Sensors And Actuators, 17, 1989, Seiten 593 bis 597 ist bereits ein katalytischer Gassensor bekannt, der einen aus Silizium bestehenden Trägerkörper aufweist, der einen dikken Randbereich und einen durch eine Ausnehmung festgelegten membranartig dünnen Mittenbereich hat, auf dem ein Thermofühler und eine katalytisch aktive Oberflächenschicht angeordnet ist. In dem dicken Randbereich des Trägerkörpers liegt als Wärmequelle ein bipolarer Transistor mit einer Leistungsaufnahme von 450 mW. Dieser Transistor führt zu einer Aufheizung des gesamten Gassensors, wobei das Thermosensorelement im membranartig dünnen Bereich auf einem gegenüber dem übrigen Gassensor niedrigeren Temperaturniveau liegt. Das Temperaturgleichgewicht im Bereich des Thermosensorelementes stellt sich auf einem Temperaturniveau ein, das davon abhängig ist, ob durch katalytische Gasreaktion an der katalytisch aktiven Oberfläche zusätzliche Wärmeenergie frei wird oder nicht. Ein derartiger katalytischer Gassensor ist aufgrund seiner hohen Leistungsaufnahme für solche Anwendungsfälle ungeeignet, bei denen beispielsweise aufgrund einer allein durch eine Batterie gebildeten Leistungsquelle die verfügbare Versorgungsleistung begrenzt ist.

Ein katalytischer Gassensor sowie ein Verfahren zu dessen Herstellung der eingangs genannten Art sind aus der DE 35 13 033 C2 bekannt. Der bekannte katalytische Gassensor hat einen aus einem ätzbaren Material bestehenden Trägerkörper, der eine Ausnehmung hat, die rückseitig in den Trägerkörper eingeätzt ist, wodurch der Trägerkörper im Bereich oberhalb der Ausnehmung eine Membran bildet. Auf der Membran ist ein Heizelement mit einer katalytisch aktiven Oberflächenschicht. Nötigerweise besteht bei diesem katalytischen Gassensor der membranartige Bereich aus dem Material des Trägerkörpers, das beim Gegenstand dieser Entgegenhaltung Silizium ist. Die Schichtdicke der Membran dieses bekannten Gassensors ist allein durch geeignete Wahl der Ätzdauer für das Ätzen der rückseitigen Ausnehmung festlegbar, so daß der Membranbereich aus fertigungstechnischen Gründen relativ dick ausfällt. Eine derart dicke, aus dem gut wärmeleitenden Silizium bestehenden Membran führt, wenn keine weiteren Isolationsmaßnahmen getroffen sind, zu einer unerwünscht hohen Wärmeaufnahme des Gassensors. Zwar ist in der Entgegenhaltung gleichfalls offenbart, den Randbereich der Membran mit Materialaussparungen zu versehen, um die Wärmeableitung und somit den Leistungsbedarf des Gassensors zu vermindern. Trotz derartiger zusätzlicher Isolationsmaßnahmen, die die mechanische Festigkeit des Gassensors unerwünscht stark herabsetzen, hat der bekannte Gassensor dennoch eine für solche Anwendungsfälle zu hohe Leistungsaufnahme, bei denen die verfügbare Versorgungsleistung beispielsweise aufgrund der Speisung durch eine Batterie begrenzt ist.

Ausgehend von diesem Stand der Technik liegt der vorliegenden Erfindung die Aufgabe zugrunde, einen katalytischen Gassensor der eingangs genannten Art sowie ein Verfahren zum Herstellen eines katalytischen Gassensors der eingangs genannten Art so auszugestalten, daß dieser eine weiter verminderte Leistungsaufnahme bei einfacher Herstellbarkeit hat.

Diese Aufgabe wird bei einem Gassensor nach dem Oberbegriff des Patentanspruchs 1 durch die im kennzeichnenden Teil des Patentanspruchs angegebenen Merkmale und bei einem Verfahren nach dem Oberbegriff des Patentanspruchs 5 durch die im kennzeichnenden Teil des Patentanspruchs 5 angegebenen Verfahrensschritte gelöst.

Bevorzugte Weiterbildungen der vorliegenden Erfindung sind in den abhängigen Ansprüchen angegeben.

Ein bevorzugtes Ausführungsbeispiel des erfindungsgemäßen Gassensors sowie ein Verfahren zu dessen Herstellung wird nachfolgend erläutert.

Es zeigt:

Die einzige Figur eine Ausführungsform des erfindungsgemäßen Gassensors.

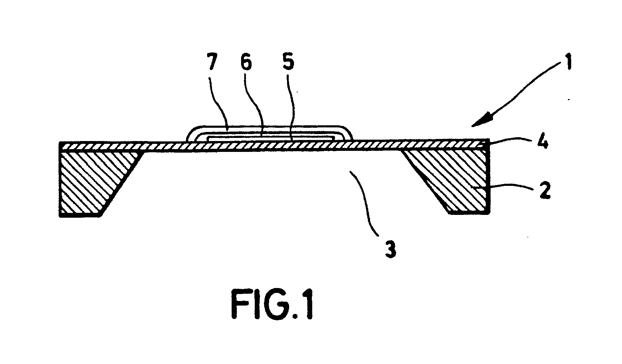

Der in Fig. 1 in seiner Gesamtheit mit dem Bezugszeichen 1 bezeichnete katalytische Gassensor umfaßt im wesentlichen einen aus Silizium bestehenden Trägerkörper 2, welcher eine Ausnehmung 3 hat, die von einer Membran 4 überspannt wird. Die Membran 4 besteht aus Nitrid. Auf der Membran 4 ist ein mäanderförmiger Heizwiderstand 5 aus Polysilizium angeordnet, der von einer isolierenden Passivierungsschicht 6 umschlossen ist, die ihrerseits von einer Palladiumschicht 7 umgeben ist, die die katalytisch aktive Oberflächenschicht des Gassensors bildet.

Nachfolgend wird das Herstellungsverfahren des in Fig. 1 gezeigten Ausführungsbeispiels des katalytischen Gassensors 1 erläutert. Als Ausgangsmaterial für den Trägerkörper 2 dient ein Siliziumwafer, der eine 100-Orientierung hat. Der Siliziumwafer, der später den Trägerkörper 2 bildet, wird thermisch oxydiert. Anschließend werden auf beide Seiten des Siliziumwafers Nitridschichten von 300 nm Dicke aufgebracht, wobei die Nitridschichten vorzugsweise in chemischen Dampfabscheidungsverfahren bei Niederdruck (LPCVD) abgeschieden werden.

Auf die obere Nitridschicht, die später die Membran 4 bilden wird, wird durch einen weiteren LPCVD-Prozeß eine 400 nm dicke Schicht aus Polysilizium aufgebracht, die durch Photolithographie und naßchemisches Ätzen strukturiert wird. Die derart in Form eines Mäanders mit einer Leiterbahnbreite von 15 um strukturierte Polysiliziumschicht bildet den Heizwiderstand 5, der eine Fläche von 600 um mal 600 um bedeckt. Sogenannte Bondpads bzw. Anschlußflächen für den Heizwiderstand 5 (nicht dargestellt) werden durch Aufdampfen von Aluminium und einen weiteren Ätzprozess gebildet. Die Struk turen werden durch die Passivierungsschicht 6 geschützt, die durch chemisches Dampfabscheiden einer Nitridschicht von 300 nm Dicke gebildet wird, welche im Bereich der Bondpads durch Trockenätzen geöffnet wird.

Die Nitridschicht auf der dem Heizwiderstand 5 abgewandten Seite des Siliziumwafers 5 wird durch Trockenätzen zu einer Ätzmaske strukturiert, woraufhin durch anisotropes Ätzen mittels einer KOH-Lösung die Ausnehmung 3 zur Definition des Trägerkörpers 2 gebildet wird, welche sich bis zur Membran 4 erstreckt und diese freilegt. Die freigeätzte Membran hat eine Fläche von 1 mm mal 1 mm.

Abschließend wird eine 10 nm dicke Palladiumschicht auf die Oberfläche des Sensors aufgedampft, die die katalytisch aktive Oberflächenschicht bildet, und die mit Hilfe einer Lochmaske (nicht dargestellt) strukturiert wird.

Mittels an sich bekannter Auftragsverfahren ist es möglich, diese Paladiumschicht mit einer hohen Porosität zu erzeugen, wodurch die Empfindlichkeit des Gassensors weiter gesteigert wird.

Bei der oben erläuterten Ausführungsform besteht der Trägerkörper aus Silizium. Anstelle des Siliziums kommen nicht nur andere Halbleitermaterialien in Betracht, sondern können auch ätzbare Metalle verwendet werden.

Bei der Ausführungsform besteht die Membran aus Siliziumnitrid. Anstelle dieses Materials kann die Membran aus jedem Oxid oder Nitrid eines Halbleiters oder Metalles bestehen.

Die Ausführungsform gemäß Fig. 1 umfaßt lediglich einen Heizwiderstand 5, der einerseits dazu dient, die katalytisch aktive Oberflächenschicht 7 auf die benötigte Temperatur zu bringen, und andererseits durch Messung seines Widerstandswertes die Temperaturbestimmung und damit die Bestimmung des Vorliegens eines brennbaren oder nicht brennbaren Gases er möglicht. Es können jedoch auch Thermoelemente zur direkten Temperaturmessung auf der Membran 4 integriert werden. Falls eine Messung in Brückenschaltung gewünscht ist, können sowohl das Referenzelement wie auch die Brückenwiderstände und das Sensorelement auf einem Chip auf der Membran 4 integriert werden. Ebenfalls kann im Falle einer Brückenschaltung das Referenzelement auf einer zweiten gleichartigen Membran auf dem gleichen Chip angeordnet werden. Unabhängig von derartigen Modifikationen, wie sie oben angesprochen wurden, zeigt der erfindungsgemäße katalytische Gassensor 1 einen geringen Leistungsbedarf von weniger als 100 mW, schnelle Ansprechzeiten in der Größenordnung von 10 ms, eine gute Langzeitstabilität, sowie kleine Baumaße.

## Ansprüche

1. Katalytischer Gassensor (1)
mit einem aus einem ätzbaren Material bestehenden Trägerkörper (2), der eine Ausnehmung (3) hat,
mit einer die Ausnehmung (3) des Trägerkörpers (2) überspannenden Membran (4),
mit einem auf der Membran (4) angeordneten Heizelement (5) und
mit einer katalytisch aktiven Oberflächenschicht (7),
dadurch gekennzeichnet,
daß die Membran aus einem Isolationsmaterial der Dünnschichttechnik besteht.

2. Katalytischer Gassensor nach Anspruch 1, dadurch gekennzeichnet,

daß die Membran (4) aus einem Oxid oder Nitrid eines Halbleitermateriales oder eines Metalles besteht.

3. Katalytischer Gassensor nach Anspruch 2, dadurch gekennzeichnet,
daß die Membran (4) aus Siliziumoxid, Siliziumnitrid oder Aluminiumoxid besteht.

4. Katalytischer Gassensor nach einem der Ansprüche 1 bis 3, dadurch gekennzeichnet,
daß das Heizelement ein Heizwiderstand (5) ist, der durch eine photolithographisch strukturierte leitfähige Schicht gebildet wird.

5. Verfahren zum Herstellen eines katalytischen Gassensors (1), der einen Trägerkörper (2) aus ätzbarem Material mit einer Ausnehmung (3), eine die Ausnehmung (3) überspannende Membran (4), ein Heizelement (5) und eine katalytisch aktive Oberflächenschicht (7) aufweist, bei dem die Ausnehmung (3) in dem Trägerkörper (2) mittels eines photolithographischen Ätzverfahrens erzeugt wird, dadurch gekennzeichnet,
daß eine Isoliermaterialschicht in Dünnschichttechnik auf den aus einem ätzbaren Material bestehenden Trägerkörper (2) aufgetragen wird,
daß die Ausnehmung (3) von der der Isoliermaterialschicht abgewandten Seite des Trägerkörpers (2) durch diesen bis zu der Isoliermaterialschicht geätzt wird, wodurch diese eine Membran (4) bildet, und
daß eine leitfähige Schicht auf die Membran (4) aufgebracht und photolithographisch geätzt wird zum Strukturieren des auf der Membran liegenden, als Heizwiderstand ausgebildeten Heizelementes (5).

6. Verfahren nach Anspruch 5, gekennzeichnet durch folgende Verfahrensschritte:
Thermisches Oxidieren des Trägerkörpers (2), und beidseitiges Beschichten des Trägerkörpers (2) mit einem Nitrid.

7. Verfahren nach Anspruch 6, gekennzeichnet durch folgende weitere Verfahrensschritte:
Einseitiges Aufbringen und photolithographisches Ätz-Strukturieren einer Polysiliziumschicht zum Bilden des Heizwiderstandes (5),
Aufdampfen von Aluminium und photolithographisches Ätz-Strukturiern desselben zum Erzeugen von Bondpads des Heizwiderstandes (5),
Beschichten des Heizwiderstandes (5) mit einer Passivierungsschicht (6), und
Öffnen der Passivierungsschicht (6) im Bereich der Bondpads durch Trockenätzen.

8. Verfahren nach einem der Ansprüche 5 bis 7, gekennzeichnet durch folgende weitere Verfahrensschritte:
Trockenätzen der Nitridschicht, die auf der dem Heizwiderstand (5) abgewandten Seite des Trägerkörpers (2) liegt, zum Stukturieren einer Ätzmaske für das nachfolgende Ätzen der Ausnehmung (3).

9. Verfahren nach Anspruch 8, dadurch gekennzeichnet,
daß die Ausnehmung (3) durch anisotropes Ätzen in einer KOH-Lösung gebildet wird.

10. Verfahren nach einem der Ansprüche 7 bis 9, gekennzeichnet durch folgende Verfahrensschritte:
Aufdampfen einer Palladiumschicht (7) auf die Passivierungsschicht (6) des Heizwiderstandes (5), und Strukturieren der Palladiumschicht (7) mit einer Maske zum Bilden der katalytisch aktiven Oberflächenschicht.

FIG.1

**EUROPÄISCHER RECHERCHENBERICHT**

EP 90117508.3

## EINSCHLÄGIGE DOKUMENTE

| Kategorie | Kennzeichnung des Dokuments mit Angabe, soweit erforderlich. der maßgeblichen Teile | Betrifft Anspruch | KLASSIFIKATION DER ANMELDUNG (Int. Cl.⁵) |
|---|---|---|---|
| X | EP - A2 - 0 076 935 (HONEYWELL) * Zusammenfassung; Fig., Seite 19, Zeile 18 - Seite 23, Zeile 20; Seite 30, Zeile 20 - Seite 43 * -- | 1-10 | G 01 N 27/16 |
| P,X | DE - A1 - 3 839 414 (SIEMENS) * Gesamt * | 1-5 | |
| A | | 6-10 | |
| A | -- DE - A1 - 3 743 399 (SIEMENS) * Anspruch 1; Fig. * -- | 1,7 | |
| D,A | DE - C2 - 3 513 033 (GESELLSCHAFT FÜR GERÄTEBAU) * Gesamt * ---- | 1-10 | |

| | RECHERCHIERTE SACHGEBIETE (Int. Cl.⁵) |
|---|---|
| | G 01 N H 01 L |

Der vorliegende Recherchenbericht wurde für alle Patentansprüche erstellt.

| Recherchenort | Abschlußdatum der Recherche | Prüfer |
|---|---|---|
| WIEN | 19-12-1990 | NARDAI |